**Europäisches Patentamt**

**European Patent Office**

**Office européen des brevets**

(19)

(11) Veröffentlichungsnummer: **0 133 552**
**B1**

# (12) EUROPÄISCHE PATENTSCHRIFT

(45) Veröffentlichungstag der Patentschrift:
**25.11.87**

(21) Anmeldenummer: **84109173.9**

(22) Anmeldetag: **02.08.84**

(51) Int. Cl.⁴: **C 08 J 5/18,** B 29 C 43/20,
B 29 D 9/00, B 32 B 27/08

(54) Verfahren zur Herstellung von flächigem Halbzeug.

(30) Priorität: **13.08.83 DE 3329341**

(43) Veröffentlichungstag der Anmeldung:
**27.02.85 Patentblatt 85/9**

(45) Bekanntmachung des Hinweises auf die Patenterteilung:
**25.11.87 Patentblatt 87/48**

(84) Benannte Vertragsstaaten:
**BE DE FR GB IT NL**

(56) Entgegenhaltungen:
**EP-A-0 072 210**

**Die Akte enthält technische Angaben, die nach
dem Eingang der Anmeldung eingereicht wurden
und die nicht in dieser Patentschrift enthalten sind.**

(73) Patentinhaber: **BASF Aktiengesellschaft, Carl-
Bosch- Strasse 38, D-6700 Ludwigshafen (DE)**

(72) Erfinder: **Portugall, Michael, Dr., Raiffeisenstrasse
7, D-6706 Wachenheim (DE)**
Erfinder: **Fischer, Juergen, Dr., Thomas- Mann-
Strasse 62, D-6700 Ludwigshafen (DE)**
Erfinder: **Seiler, Erhard, Dr., Erpolzheimer Strasse
1, D-6700 Ludwigshafen (DE)**
Erfinder: **Sabater, Eudaldo, Schaeferwaeldchen 36,
D-6733 Hassloch (DE)**

## Beschreibung

Flächiges, thermoplastisch verformbares Halbzeug mit sehr hohem E-Modul kann man aus Kunststoff-Folien, die in einer Vorzugsrichtung erhöhte mechanische Eigenschaften zeigen, dadurch herstellen, daß man mehrere Folien übereinander drapiert und oberhalb der Glastemperatur des Kunststoffs miteinander verpreßt. Kunststoff-Folien, die in Vorzugsrichtung erhöhte mechanische Eigenschaften zeigen, sind z. B. solche, die parallel liegende Verstärkungsfasern enthalten. Die Herstellung solcher unidirektional verstärkter Folien aus Thermoplasten ist aber recht schwierig, da man entweder mit hochviskosen Kunststoff-Schmelzen tränken muß oder beim Tränken mit Lösungen größere Mengen Lösungsmittel verdampfen muß. Außerdem liegt hier grundsätzlich die Problematik der unterschiedlichen Wärmeausdehnungskoeffizienten von Kunststoff und Faser vor, was im Fertigteil zu Ablösung von Faser und Matrix und damit zu Schädigungen führen kann.

Es sind eine Reihe von polymeren Verbindungen bekannt, die in der Schmelze durch Orientierung von flüssigkristallinen Bereichen anisotrope Eigenschaften zeigen, welche auch in festem Zustand noch bewahrt werden können, so daß sie in einer Vorzugsrichtung erhöhte mechanische Eigenschaften zeigen. Diese sogenannten flüssig-kristallinen Polymeren sind z.B. beschrieben in "Polymer Liquid Cristals" Ciferri, Krigbaum, Meyer, Academic Press, 1982. Nach der EP-A-45 575 werden lyotrope und thermotrope, flüssig-kristalline Polymere unterschieden. Lyotrope flüssig-kristalline Polymere zeigen die Anisotropie in Lösung, aus der heraus beispielsweise Folien mit anisotropen Eigenschaften gewonnen werden können. Dazu zählen z.B. vollaromatische Polyamide, aromatisch-aliphatische Polyamide, aromatische Polyamidhydrazide, Polybenzbioxazole und Polybenzbithiazole.

Die im Rahmen dieser Erfindung bevorzugten thermotropen flüssig-kristallinen Polymeren zeigen die Anisotropie in der Schmelze, aus der heraus sie zu Folien mit anisotropen Eigenschaften verarbeitet werden können. Dazu zählen z.B. aromatische Polyester, aromatisch-aliphatische Polyester, aromatische Polyazomethine und aromatische Polyestercarbonate.

Bevorzugte Polymere sind thermotrop flüssigkristalline Polyester, die entweder aus rein aromatischen oder aus aromatischen und aliphatischen Monomereinheiten aufgebaut sind. Solche Polyester sind in der EP-A-45 575 ausführlich beschrieben.

Aus der EP-A-45 575 ist auch bekannt, daß orientierte Formteile aus flüssig-kristallinen Polymeren verbesserte mechanische Eigenschaften in der Orientierungsrichtung zeigen, so daß sie vergleichbar sind mit Formteilen aus faserverstärkten Polymeren.

Folien aus flüssig-kristallinen Polymeren, die in Vorzugsrichtung erhöhte mechanische Eigenschaften zeigen, können nach verschiedenen Verfahren hergestellt werden. Bei lyotropen flüssig-kristallinen Polymeren kann man z.B. aus der Polymerlösung Folien herstellen.

Bei thermotropen flüssig-kristallinen Polymeren kann man unorientierte Folien dadurch orientieren, daß man sie in starke elektrische oder magnetische Felder einbringt. Man kann orientierte Folien ferner nach dem in der EP-A-45 575 beschriebenen Verfahren herstellen, indem man eine Schmelze des flüssig-kristallinen Polymeren zuerst Scherkräften unterwirft, dann in einem Gitter mit speziell konstruierten Düsen in einen eindimensional gerichteten Fluß überführt und schließlich zu einer Folie extrudiert.

In der EP-A-72 210 ist ein Verfahren zur Herstellung von Laminaten mit multiaxialer Orientierung der mechanischen Eigenschaften beschrieben, bei dem mehrere einachsig orientierte Folien aus flüssigkristallinen Polymeren übereinandergelegt und thermisch miteinander verbunden werden.

Demgegenüber bestand die Aufgabe der vorliegenden Erfindung darin, Laminate bereitzustellen, die in Plattenebene in jeder Richtung einen gleichen Elastizitätsmodul aufweisen, der aber wesentlich höher ist als der Elastizitätsmodul senkrecht zur Plattenebene.

Gegenstand der Erfindung ist ein Verfahren zur Herstellung von flächigem, thermoplastisch verformbarem Halbzeug, bei dem man mehrere Kunststoff-Folien aus einem flüssig-kristallinen Polymeren, die in einer Vorzugsrichtung erhöhte mechanische Eigenschaften zeigen, so übereinander drapiert, daß sie in der Vorzugsrichtung parallel liegen, und in einer Form oberhalb der Glastemperatur des Kunststoffs so miteinander verpreßt, daß dieser fließt und die Form vollständig ausfüllt, wobei die Form in der zur Vorzugsrichtung der Folien senkrecht stehenden Richtung um 0,2 bis 20% breiter ist als die Folien.

Bei einem besonders bevorzugten Verfahren wird das flüssig-kristalline Polymere auf herkömmlichen Folienextrudern oberhalb der Glastemperatur der Polymeren extrudiert und dann durch Verstrecken bei einem Reckverhältnis von mindestens 2:1, vorzugsweise 3:1 bis 30:1, in Abzugsrichtung aus der Schmelze orientiert. Das Verstrecken kann mit Hilfe üblicher Walzen vorgenommen werden, wobei hohe Abzugsgeschwindigkeiten, vorzugsweise in der Größenordnung von 1 bis 10 m · min$^{-1}$ angewandt werden sollen, um ein gutes Reckverhältnis zu erhalten. Vorzugsweise führt man das Verstrecken unmittelbar nach der Extrusion der Folien "on line" durch. Die Dicke der erhaltenen Folien liegt im allgemeinen zwischen 10 und 1000 µm, vorzugsweise zwischen 20 und 250 µm.

Der Grad der Orientierung kann durch Messung von mechanischen Eigenschaften, zweckmäßigerweise des E-Moduls, an einer unorientierten und an einer orientierten Folie ermittelt werden. Geeignete orientierte Folien zeigen einen mehr als doppelten, vorzugsweise mindestens vierfachen und besonders günstig mindestens sechsfachen E-Modul gegenüber nicht orientierten Folien.

Bei der erfindungsgemäßen Herstellung des flächigen Halbzeugs werden nun mehrere, vorzugsweise 10 bis 50 einzelne orientierte Folien übereinander drapiert, wobei sie alle in Vorzugsrichtung parallel gelegt werden. Es ist auch möglich, zwischen die einzelnen Lagen orientierter Folien unorientierte oder solche aus andersartiger Kunststoffen zu legen. Dieser Prozeß kann unmittelbar nach der Extrusion und Verstreckung an einer noch nicht vollständig abgekühlten Folie durchgeführt werden, er kann aber auch mit einer zwischengelagerten Folie nach längerer Zeit durchgeführt werden.

Die Gelege werden dann bei Temperaturen, die - vorzugsweise 5 bis 200° C-oberhalb der Glastemperatur des Polymeren liegen, miteinander verpreßt. Dies geschieht erfindungsgemäß in solchen Formen, die - in der zur Vorzugsrichtung der Folien senkrecht stehenden Richtung - um 0,2 bis 20%, vorzugsweise um 0,5 bis 10% breiter sind als die Folien selbst. Beim Verpressen fließt dann das flüssig-kristalline Polymere quer zur Vorzugsrichtung, um die Form vollständig auszufüllen. Die Verweilzeit in der Form liegt vorzugsweise bei 5 bis 20 min. Es kann vorteilhaft sein, während des Verpressens die Temperatur succesive nach oben oder unten zu verändern, um spezielle Effekte zu erzielen. Die Maße der verwendeten Formen können in weiten Grenzen schwanken, vorzugsweise sind die Formen 2 bis 200 cm, insbesondere 20 bis 120 cm breit. Der Preßdruck liegt je nach Polymeren im allgemeinen zwischen 5 und 60, bevorzugt zwischen 10 und 20 bar.

Bei dieser Ausführungsform wird während des Verpressens bei Temperaturen oberhalb der Glastemperatur des flüssig-kristallinen Polymeren die Orientierung und damit die Anisotropie in der Folienebene aufgehoben; die beim Pressen erhaltenen Platten weisen in Plattenebene in jeder Richtung einen gleichen Elastizitätsmodul auf; dieser Elastizitätsmodul ist aber wesentlich höher als der Elastizitätsmodul senkrecht zur Plattenebene. Das bedeutet, daß ein nach diesem Verfahren hergestelltes Halbzeug oder Fertigteil Eigenschaften aufweist, die den Eigenschaften eines Halbzeugs oder Fertigteils vergleichbar sind, das hergestellt wurde durch Verpressen eines Geleges von mehreren einsinnig orientierten Folien aus flüssig-kristallinen Polymeren, die z.B. in Winkeln von 0°/30°/45°/60°/90° usw. übereinanderdrapiert und verpreßt wurden, um dadurch gleichgute mechanische Eigenschaften in jeder Beanspruchungsrichtung zu erzeugen.

Das erfindungsgemäß hergestellte flächige Halbzeug weist eine Dicke von 0,1 bis 5, vorzugsweise von 1 bis 4 mm auf. Seine mechanischen Eigenschaften sind anisotrop. Das Halbzeug ist beliebig lange lagerbar und kann bei Bedarf durch Thermoformen oberhalb der Glastemperatur des Polymeren zu Fertigteilen weiterverarbeitet werden.

**Beispiel 1**

Ein Copolyester aus Polyethylenterephthalat und 60 mol% p-Hydroxibenzoesäure mit einer inherenten Viskosität von 0.65 dl/g (gemessen in Phenol/o-Dichlorbenzol 3/2, 0,5% Lösung) wird in einem Extruder des Typs Troester UP 30 einer Folienextrusion unterworfen. Bei einer Zylindertemperatur von 200° C - 220° C - 240° C - 250° C und einer Düsentemperatur von 250° C wurde eine 180 mm breite Folie von 70 μm Dicke extrudiert. Die Abzugsgeschwindigkeit betrug 3,8 m/min, die Walzen waren auf 100° C beheizt. Es ergab sich ein Reckverhältnis von 12,5:1.

Die endlos extrudierte Folie wurde in Stücke von jeweils 250 mm Länge geschnitten. 15 dieser Zuschnitte wurden parallel übereinander in eine 190 mm breite Form so eingelegt, daß auf beiden Seiten 5 mm Raum bleibt. Das Gelege wurde 10 min lang bei 250° C und 40 bar verpreßt. Nach dem Abkühlen wurde eine 1 mm dicke Platte erhalten, die in allen Richtungen in der Plattenebene etwa gleiche Elastizitätsmodule aufweist.

**Beispiel 2**

Ein flüssig-kristalliner Polyester aus
30 Mol-% Terephthalsäure
40 Mol-% p-Hydroxibenzoesäure
10 Mol-% Hydrochinon
14 Mol-% 2,7-Dihydroxinaphthalin
6 Mol-% 4,4'-Dihydroxibiphenyl

wurde wie in Beispiel 1 zu einer einsinnig orientierten, 100 μm dicken Folie extrudiert. Dabei lag die Zylindertemperatur des Extruders bei 250 bis 300° C, die Düsentemperatur bei 300° C. Die 180 mm breite Folie wurde mit einer Geschwindigkeit von 8 m/min abgezogen.

Die Folie wurde in 250 mm lange Stücke geschnitten. 11 solcher Zuschnitte wurden in einer 200 mm breiten Form so übereinanderdrapiert, daß an den Seiten je 5 mm Raum zum Fließen des Polymeren blieb. Das Gelege wurde 10 min bei 280° C und 10 bar verpreßt, die Form wurde abgekühlt und die Platte entformt. Sie war knapp 1 mm dick.

## Patentansprüche

1. Verfahren zur Herstellung von flächigem, thermoplastisch verformbarem Halbzeug, bei dem man mehrere Kunststoff-Folien aus einem flüssig-kristallinen Polymeren, die in einer Vorzugsrichtung erhöhte mechanische Eigenschaften zeigen, so übereinander drapiert, daß sie in der Vorzugsrichtung parallel liegen, und in einer Form oberhalb der Glastemperatur des Kunststoffs so miteinander verpreßt, daß dieser fließt und dabei die Form vollständig ausfüllt, wobei die Form in der zur Vorzugsrichtung der Folien senkrecht stehenden Richtung um 0,2 bis 20% breiter ist als die Folien.

2. Verfahren zur Herstellung von flächigem Halbzeug, dadurch gekennzeichnet, daß man Folien aus einem thermotropen flüssig-kristallinen Polymeren oberhalb der Glastemperatur des Polymeren extrudiert, durch Verstrecken bei einem Reckverhältnis von mindestens 2:1 in Abzugsrichtung orientiert, und mehrere Folien gemäß Anspruch 1 miteinander verpreßt.

## Claims

1. A process for the production of a sheet-like, thermoplastically deformable semi-product, wherein a plurality of plastic sheets consisting of a liquid crystalline polymer and exhibiting improved mechanical properties in a preferred direction are so laid on top of one another that they lie parallel to one another in the preferred direction, and are so compressed in a mould at a temperature above the glass transition temperature of the plastic that the latter flows and thus completely fills the mould, the mould being from 0.2 to 20% wider than the sheets in the direction at right angles to the preferred direction of the plastic sheets.

2. A process for the production of a sheet-like semi-product, wherein sheets of a thermotropic liquid crystalline polymer are extruded at a temperature above the glass transition temperature of the polymer and oriented by drawing at a stretch ratio of at least 2:1 in the take-up direction, and a plurality of sheets are compressed as claimed in claim 1.

## Revendications

1. Procédé de fabrication d'un demi-produit plat, thermoplastiquement déformable, dans lequel plusieurs feuilles en matière plastique, en un polymère cristallin-liquide, qui possèdent des propriétés mécaniques accrues dans une direction préférentielle, sont superposées de telle façon qu'elles sont disposées parallèlement dans la direction préférentielle, puis comprimées dans un moule à une température supérieure à la température de transition vitreuse de la matière plastique, à laquelle celle-ci devient fluide et remplit complètement le moule, ce moule possédant dans la direction perpendiculaire à la direction préférentielle des feuilles une largeur supérieure de 0,2 à 20% à celle des feuilles.

2. Procédé de fabrication d'un demi-produit plat, caractérisé en ce que l'on produit par extrusion d'un polymère cristallin-liquide thermotrope à une température supérieure à sa température de transition vitreuse des feuilles, qui sont orientées par un étirage sous un rapport d'au moins 2:1 dans la direction d'étirage, puis on réunit plusieurs feuilles par une compression selon la revendication 1.